# EUROPÄISCHE PATENTANMELDUNG

(11) **EP 3 644 465 A1**
(43) Veröffentlichungstag der Anmeldung: **29.04.2020**
(21) Anmeldenummer: 18202429.9
(22) Anmeldetag: 24.10.2018
(51) Int. Cl.: H02G 3/04, H02G 3/06

(54) **VORRICHTUNG ZUM VERBINDEN VON KABELBAHNABSCHNITTEN UND KABELBAHN**

(71) Anmelder: Zurecon AG, 9053 Teufen AR (CH)
(72) Erfinder: PFLUGER, Gerd, 4625 Oberbuchsiten (CH)
(74) Vertreter: Rutz & Partner

(57) **Zusammenfassung**

Die Vorrichtung (2), die zum mechanischen Verbinden benachbarter erster und zweiter Kabelbahnabschnitte (1A, 1B) vorgesehen ist, die je wenigstens ein erstes bzw. zweites Bodenelement (12A; 12B) und beidseits daran anschliessende mit Seitenwände (11A; 11B) umfassen, die mit Öffnungen versehen sind (111) und die nach deren Verbindung eine Kabelbahn (1) bilden, umfasst ein erstes Verbindungsteil (21), das eine erste Kopplungsplatte (210) mit wenigstens einem daraus ausgeschnittenen ersten Haken (212) aufweist, und ein zweites Verbindungsteil (22), das eine zweite Kopplungsplatte (220) mit wenigstens einem daraus ausgeschnittenen zweiten Haken (222) aufweist, sowie ein Kopplungsteil (23), mittels dessen das erste Verbindungsteil (21) und das zweite Verbindungsteil (22), die mit den gegeneinander gerichteten ersten und zweiten Haken (212; 222) in Öffnungen (111) benachbarter Seitenwände (11A, 11B) oder benachbarter Bodenelemente (12A, 12B) einsetzbar sind, miteinander verbindbar sind. Erfindungsgemäss ist vorgesehen, dass das Kopplungsteil (23) plattenförmig ausgebildet und mit wenigstens einer Verbindungsöffnung (230) versehen ist, durch die bolzenförmige Verbindungsteile (219, 229) hindurch geführt sind, mittels denen das erste Verbindungsteil (21), sofern es nicht bereits unlösbar mit dem Kopplungsteil (23) verbunden ist, und das zweite Verbindungsteil (22), sofern es nicht bereits unlösbar mit dem Kopplungsteil (23) verbunden ist, formschlüssig und lösbar mit dem Kopplungsteil (23) verbindbar sind.

## Beschreibung

Die Erfindung betrifft eine Vorrichtung zum Verbinden von Kabelbahnabschnitten und eine mit solchen Vorrichtungen versehene Kabelbahn.

In Gewerbe-, Industrie- und Verwaltungsgebäuden sowie in Tunnelbauten werden Kabel, insbesondere Kabel für Stark- und Schwachstromnetze, Leitungen und Rohre, infolge fehlender Eigenstabilität oft in metallene Kabelbahnen, wie Kabelkanäle oder Kabelpritschen, eingelegt und so z.B. von einem Schaltfeld oder einer Zentrale zu den Verbrauchern geführt. Kabelbahnen dieser Art, die aus einzelnen Kabelbahnabschnitten zusammengesetzt werden, sind z.B. aus dem [1] Produktkatalog der LANZ OENSINGEN AG, Juli 2017, bekannt. Zur Verbindung der Kabelbahnabschnitte sind Vorrichtungen verwendbar, die ebenfalls in diesem Produktekatalog beschrieben sind.

Aus [2], EP1049226A2, ist eine Verbindungsvorrichtung bekannt, mittels der stirnseitig aneinander anstossende und mit Wandöffnungen versehene Seitenwände benachbarter Kabelbahnabschnitte miteinander verbindbar sind. Die Verbindungsvorrichtung umfasst Verbindungsplatten, die an der Unterseite mit Haken versehen sind. Zur Installation der Verbindungsplatten an den Aussenseiten der Seitenwände werden die Haken von oben in die Wandöffnungen eingeführt und nach unten gegen den Boden des Kabelkanals geschoben. In der Folge werden die Verbindungsplatten anhand eines Sicherungsmittels fixiert, das drehbar oder verschiebbar mit der Verbindungsplatte verbunden ist und in den Abschlussrand der Seitenwand eingehängt wird. Mit dem Sicherungsmittel werden somit Gelenk-, Scharnier- oder Schieberfunktionen realisiert, weshalb feingliederige Vorrichtungsteile erforderlich sind, die erheblichen Belastungen standhalten müssen. Da für die Arretierung der Verbindungsvorrichtung ein Zusammenwirken mit der Seitenwand erforderlich ist, ist diese Verbindungsvorrichtung nicht universell einsetzbar.

Zu beachten ist ferner, dass Krafteinwirkungen auf die Kabelbahn, insbesondere Schwingungen in vertikaler Richtung, zumindest teilweise durch die Sicherungsmittel aufgefangen werden müssen, um zu verhindern, dass die Verbindungsplatten in vertikaler Richtung nach oben geschoben werden und die Haken sich aus den Wandöffnungen lösen. Auf die Sicherungsmittel können daher grössere Kräfte einwirken, weshalb diese robust auszugestalten sind, damit keine Fehlfunktionen auftreten. Diese Verbindungsvorrichtung ist daher relativ aufwendig ausgestaltet und mit entsprechendem Aufwand zu bedienen.

Ferner ist zu beachten, dass der Abstand der letzten Wandöffnungen der einander zugewandten Kabelbahnen oft nicht dem durchgehenden Rasterabstand der Wandöffnungen der Kabelbahnen entspricht. Damit die Haken der Verbindungsplatten in diesem Fall in die Wandöffnungen eingehängt werden können, müssen die Endstücke der einander zugewandten Kabelbahnen entsprechend beabstandet werden, weshalb eine unerwünschte Lücke resultiert.

Aus [3], DE19841643A1, ist eine Verbindungsvorrichtung für eine Kabelbahn bekannt, die aus einem im Querschnitt etwa U-förmigen Blechteil besteht, dessen erstes Ende gering verkröpfte Seiten- und Bodenwandungen aufweist, so dass ein weiteres Blechteil mit seinem unverkröpften zweiten Ende in das verkröpfte erste Ende des ersten Blechteils einsetzbar und in dieser Soll-Lage fixierbar ist. An den Seitenwandungen des einen Endes sind Rast- und Riegelausnehmungen ausgebildet, und an den Seitenwandungen des anderen Endes sind dazu passende Rasten und Riegel ausgebildet, so dass die beiden Kabelbahnabschnitte quer zu ihrem Längsverlauf ineinander drückbar und miteinander verbindbar sind. Die Kabelbahnabschnitte dieser Kabelbahn sind daher asymmetrisch als Steckverbinder ausgestaltet. Die Verbindungsvorrichtung ist somit in die Kabelbahn integriert, weshalb die Kabelbahn Teil der Verbindungsvorrichtung und hinsichtlich der Ausgestaltung entsprechend definiert ist. Dadurch resultieren unerwünschte Einschränkungen der Gestaltungsmöglichkeiten der Kabelbahn. Zudem resultiert ein erhöhter Fertigungsaufwand für die Kabelbahnabschnitte mit den darin integrierten Teilen der Verbindungsvorrichtung. Ein oft wünschbares Zuschneiden der Kabelbahnabschnitte vor Ort ist nicht möglich, weshalb ein idealer Verlauf der Kabelbahn gegebenenfalls nicht realisiert werden kann.

[4], EP2869417A1, offenbart eine Verbindungsvorrichtung mit zwei miteinander koppelbaren Verbindungsplatten, die gegeneinander gerichtete Haken aufweisen, die in Wandöffnungen von Kabelbahnabschnitten eingreifen können. Die Verbindungsplatten können in stirnseitig aneinander anstossende Endstücke von Kabelbahnen eingehängt und miteinander gekoppelt werden, um die benachbarten Kabelbahnen miteinander zu verbinden. Dazu weist die erste Verbindungsplatte ein massives C-Profil-förmiges Aufnahmeprofil mit gegeneinander gerichteten Abschlussplatten auf, in die eine Arretierschraube eingedreht ist, um die Verbindungsplatten zu fixieren. Diese Verbindungsvorrichtung ist relativ aufwendig ausgestaltet und nicht leicht handhabbar. Das Aufnahmeprofil erfordert zudem entsprechend grosse Abmessungen. Bei der Verbindung der Verbindungsplatten durch Schrauben besteht das Problem, dass sich diese voneinander lösen können

Der vorliegenden Erfindung liegt daher die Aufgabe zugrunde, eine verbesserte Verbindungsvorrichtung für Kabelbahnabschnitte sowie eine verbesserte Kabelbahn mit Kabelbahnabschnitten zu schaffen, die mit solchen Verbindungsvorrichtungen miteinander verbunden sind.

Die Verbindungsvorrichtung soll einfach und sicher an der Innenseite oder Aussenseite der Kanalwände oder des Kanalbodens installierbar sein und möglichst keine oder wenig zusätzliches Verbindungsmaterial, wie Schrauben und dergleichen benötigen.

Geschraubte Verbindungen, bei denen die Gefahr des selbsttätigen Lösens z.B. bei Krafteinwirkungen oder Vibrationen besteht, sollen vermieden werden.

Die Verbindungsvorrichtung soll einfach aufgebaut und kostengünstig herstellbar sein. Die Verbindungsvorrichtung soll zudem eine erhöhte Flexibilität beim Aufbau eines Kabelbahnsystems aufweisen.

Die Verbindungsvorrichtung soll es erlauben, eine stabile Verbindung zwischen zwei Kabelbahnabschnitten zu erstellen, die auch grösseren Krafteinwirkungen standhalten, die auf die Kabelbahnabschnitte einwirken.

Die Verbindungsvorrichtung soll keine Änderungen an den Kabelbahnabschnitten erfordern, so dass beliebige und gegebenenfalls am Installationsort in der Länge zugeschnittene Kabelbahnabschnitte miteinander verbindbar sind.

Die Verbindungsvorrichtung soll zudem bei Kabelbahnen aller Art, wie Kapelpritschen, Kabelleitern, Kabelkanälen und dergleichen, verwendbar sein, die gelochte Platten, wie Seitenwände oder Bodenplatten mit Öffnungen, insbesondere Längslochungen, aufweisen.

Die miteinander verbundenen Kabelbahnabschnitte sollen vorteilhaft, nach Möglichkeit mit einfachsten Mitteln drehbar gehalten werden.

Weiterhin sollen beim Einsatz der Verbindungsvorrichtung Potenzialdifferenzen innerhalb der Kabelbahn sowie Kriechströme nach Möglichkeit vermieden werden.

Diese Aufgabe wird mit einer Verbindungsvorrichtung und einer Kabelbahn gelöst, welche die in Anspruch 1 bzw. 13 angegebenen Merkmale aufweisen. Vorteilhafte Ausgestaltungen der Erfindung sind in weiteren Ansprüchen angegeben.

Die Vorrichtung, die zum mechanischen Verbinden benachbarter erster und zweiter Kabelbahnabschnitte vorgesehen ist, die je wenigstens ein erstes bzw. zweites Bodenelement und beidseits daran anschliessende Seitenwände umfassen, die mit Öffnungen versehen sind, und die nach deren Verbindung eine Kabelbahn bilden, umfasst ein erstes Verbindungsteil, das eine erste Kopplungsplatte mit wenigstens einem daraus ausgeschnittenen ersten Haken aufweist, und ein zweites Verbindungsteil, das eine zweite Kopplungsplatte mit wenigstens einem daraus ausgeschnittenen zweiten Haken aufweist, sowie einem Kopplungsteil, mittels dessen das erste Verbindungsteil und das zweite Verbindungsteil, die mit den gegeneinander gerichteten ersten und zweiten Haken in Öffnungen benachbarter Seitenwände oder Bodenelemente einsetzbar sind, miteinander verbindbar sind.

Erfindungsgemäss ist vorgesehen, dass das Kopplungsteil plattenförmig ausgebildet und mit wenigstens einer Verbindungsöffnung versehen ist, durch die bolzenförmige Verbindungsteile hindurch geführt sind, mittels denen das erste Verbindungsteil, sofern es nicht bereits unlösbar mit dem Kopplungsteil verbunden ist, und das zweite Verbindungsteil, sofern es nicht bereits unlösbar mit dem Kopplungsteil verbunden ist, formschlüssig und lösbar mit dem Kopplungsteil verbindbar sind.

Vorzugsweise ist vorgesehen, dass das erste Verbindungsteil eine erste Flügelplatte aufweist, die vorzugsweise einstückig an die einteilige oder zweiteilige erste Kopplungsplatte anschliesst und dazu vorzugsweise senkrecht geneigt ist und/oder dass das zweite Verbindungsteil eine zweite Flügelplatte aufweist, die vorzugsweise einstückig an die einteilige oder zweiteilige zweite Kopplungsplatte anschliesst und dazu vorzugsweise senkrecht geneigt ist, und dass das Kopplungsteil durch die Verbindungselemente formschlüssig mit der ersten oder der zweiten Flügelplatte verbunden ist.

Das Kopplungsteil kann in einfacher Weise formschlüssig mit den Verbindungsteilen verbunden werden. Dazu können vorteilhaft Schrauben oder Bolzen eingesetzt werden, die der formschlüssigen und nicht der kraftschlüssigen Verbindung dienen. Nach dem Einsetzen der Verbindungselemente resultiert eine gesicherte Verbindung, die sich nicht selbsttätig lösen kann. Die Verbindungselemente können besonders einfach, gegebenenfalls auch ohne Werkzeug eingesetzt werden. Z.B. werden Bolzen in Verbindungsöffnungen eingesetzt, die in der Folge durch Schwerkraft gehalten sind und/oder gegebenenfalls mittels eines Drahts in einfacher Weise gesichert werden. Die Verbindungselemente können auch einfache Sperrbolzen oder Kugelsperrbolzen sein, die nach dem Einsetzen automatisch gesichert sind. Kugelsperrbolzen werden z.B. von der Erwin Halder KG in D-88480 Achstetten-Bronnen hergestellt.

Mit der erfindungsgemässen Verbindungsvorrichtung können beliebige Kabelbahnabschnitte stabil miteinander verbunden werden. Die Verbindungsteile werden z.B. in die einander zugewandten Seitenwände der stirnseitig aneinander liegenden Kabelbahnabschnitte eingesetzt und anschliessend durch das Kopplungsteil miteinander verbunden. Die Verbindungsteile weisen nach der Installation normalerweise unterschiedliche gegenseitige Abstände auf und können trotzdem formschlüssig miteinander verbunden werden. Es können somit auch am Installationsort zugeschnittene Kabelbahnabschnitte präzise und zuverlässig miteinander verbunden werden.

Die beiden Verbindungsteile können einteilig oder mehrteilig ausgebildet sein und einen oder mehrere Haken oder mehrere Reihen von Haken aufweisen.

Das erste Verbindungsteil umfasst vorzugsweise ein oder zwei erste Verbindungssegmente mit je einer ersten Kopplungsplatte, an die an den einander zugewandten Seiten vorzugsweise einstückig miteinander verbundene erste Flügelplatten anschliessen. Zwischen diesen Flügelplatten kann das Kopplungsteil vorteilhaft fixiert werden. Das Kopplungsteil kann vorteilhaft auch einstückig mit einer Flügelplatte verbunden sein.

Auch das zweite Verbindungsteil umfasst vorzugsweise ein oder zwei zweite Verbindungssegmente mit je einer zweiten Kopplungsplatte, an die an den einander zugewandten Seiten vorzugsweise einstückig miteinander verbundene zweite Flügelplatten anschliessen, zwischen denen das Kopplungsteil wahlweise fixierbar ist.

Das erste und/oder das zweite Verbindungsteil, die vorzugsweise je aus einem Blechstück geformt sind, begrenzen mit den ersten bzw. zweiten Flügelelementen vorzugsweise einen Aufnahmekanal für das Kopplungsteil. Besonders vorteilhaft ist, dass die beiden Verbindungsteile identisch ausgebildet sein können, sodass nur ein Verbindungsteil eines Typs mit minimalem Aufwand gefertigt werden kann. Die Verbindungsteile unterscheiden sich dabei nur durch die Ausrichtung bei der Installation. Vorzugsweise wird nur ein Kopplungsteil vorgesehen, der jedoch in unterschiedlichen Ausgestaltungen zahlreiche Funktionen erfüllen kann. Das Kopplungsteil kann einstückig am ersten Verbindungsteil angeformt sein In einer ganz besonderen Ausgestaltung sind zwei Verbindungstäbe vorgesehen, die vorzugsweise je an einem der Verbindungsteile einstückig angeformt sind.

Vorzugsweise wird vorgesehen, dass die Verbindungsteile formschlüssig an die anliegenden Bodenelemente oder an die Seitenwände der Kabelbahnabschnitte und/oder formschlüssig an das wenigstens eine Kopplungsteil anschliessen. Dazu sind die ersten und/oder zweiten Kopplungsplatten des ersten und zweiten Verbindungsteils mit Einformungen oder Formelementen versehen, die zu Einformungen oder Formelementen an den Bodenelementen oder den Seitenwänden der Kabelbahnabschnitte und/oder Einformungen am Kopplungsteil korrespondieren. Durch die Einformungen und Formelemente können Kräfte aufgenommen werden, die in der Folge nicht die Verbindungsmittel belasten. Vorzugsweise bilden die Einformungen feine Raster, sodass eine präzise Justierung der Verbindungsvorrichtung möglich ist. Vorzugsweise sind die Einformungen in einem Raster angeordnet, welches erlaubt, die Verbindungsteile in kleinen Schritten einander anzunähern. Die Einformungen sind z.B. Rillen oder Sägezahnelemente sind, die senkrecht zur Längsachse des Kopplungsteils verlaufen.

Vorzugsweise sind die Verbindungselemente drehsicher montierbar. In einer weiteren vorzugsweisen Ausgestaltung ist vorgesehen, dass die ersten und/oder zweiten Kopplungsplatten des ersten und zweiten Verbindungsteils und/oder das plattenförmige Kopplungsteil federelastisch gekrümmt sind, sodass nach der Montage der Verbindungselemente eine spielfreie Verbindung resultiert, die unter mechanischer Spannung steht. Beim Festziehen der Verbindungselemente werden die Platten z.B. um einen ein bis zwei Millimeter, oder einen Bruchteil davon, federelastisch gegeneinander gebogen. In der Folge stehen die Verbindungselemente unter konstantem Druck und können sich nicht selbsttätig lösen.

Erfindungsgemässe Verbindungsvorrichtungen können vorteilhaft an den Innenseiten oder Aussenseiten der Seitenwände oder an der Oberseite oder Unterseite der Bodenelemente der Kabelbahnen montiert werden.

Die Verbindungsvorrichtung kann auch vorteilhaft zur Verbindung von Bodenelementen oder Bodenplatten der Kabelbahnabschnitte verwendet werden. Die Verbindungsvorrichtung kann vorteilhaft von unten montiert werden, ohne auf die Höhe der Kabelbahn aufsteigen zu müssen. Die Kabelbahnabschnitte werden z.B. auf Ausleger abgelegt, wonach die Verbindungsvorrichtungen vorteilhaft von unten montiert werden. Dabei können besonders vorteilhaft Verbindungsvorrichtungen mit einem gelenkigen Kopplungsteil montiert werden, der es erlaubt, die Verbindungsteile und somit die Kabelbahnabschnitte gegeneinander zu drehen.

Die vorzugsweise senkrecht von der zugehörigen Seitenwand oder vom Bodenelement nach aussen oder innen gerichteten Flügelplatten können besonders einfach an einer ausgewählten Position mit dem Kopplungsteil verbunden werden. Das Kopplungsteil und/oder die Flügelplatten weisen dabei vorzugsweise mehrere Verbindungsöffnungen oder Öffnungssegmente auf, sodass beim Verschieben des Kopplungsteils gegenüber der wenigstens einen Flügelplatte in kurzen Abständen regelmässig Verbindungsöffnungen oder Öffnungssegmente übereinander liegen und z.B. von einem Bolzen durchstossen werden können.

Die Verbindungsvorrichtung kann daher einfach installiert werden, indem die beiden Verbindungsteile an den betreffenden Stellen der Kabelbahnabschnitte eingehängt und gegeneinander gezogen werden bis die Verbindungsöffnungen oder Öffnungssegmente des Kopplungsteils und der wenigstens einen Flügelplatte übereinander liegen. Durch das Einsetzen des Verbindungselements, z.B. eines Bolzens, wird die Installation mit einem Handgriff abgeschlossen.

Mittels erfindungsgemässen Verbindungsvorrichtungen können benachbarte Kabelbahnabschnitte, die im Werk gefertigt oder am Installationsort zugeschnittene wurden, derart miteinander verbunden werden, dass sie stirnseitig aneinander anstossen, ohne dass dazwischen eine Lücke resultiert. Zum Schliessen der Lücke werden die Verbindungsteile gegeneinander gezogen, bis die passenden Verbindungsöffnungen übereinander liegen und von einem Verbindungselement durchstossen werden können.

Das Kopplungsteil kann in verschiedenen vorteilhaften Ausführungen gefertigt werden. Das Kopplungsteil kann einstückig mit dem ersten Verbindungsteil verbunden sein oder vorzugsweise als separates Element gefertigt werden, welches mit dem ersten und zweiten Verbindungsteil verbindbar ist. In vorzugsweisen Ausgestaltungen ist das Kopplungsteil symmetrisch ausgebildet und auf beiden Seiten vorzugsweise in gleicher Weise mit Verbindungsöffnungen bzw. Montageöffnungen versehen. Die gesamte Verbindungsvorrichtung ist daher symmetrisch oder asymmetrisch ausgebildet, wobei die Verbindungsteile vorzugsweise identisch ausgestaltet sind. Bei der Installation wird das Kopplungsteil z.B. durch Schrauben oder Bolzen mit dem ersten Verbindungsteil verbunden. Anschliessend werden die beiden Verbindungsteile in die Kabelbahnabschnitte eingehängt und durch Fixierung des Kopplungsteils am zweiten Verbindungsteil miteinander verbunden.

In vorzugsweisen Ausgestaltungen kann das Kopplungsteil verschiedene vorteilhafte Funktionen erfüllen, die isoliert oder in Kombination realisiert werden.

In einer ersten vorzugsweisen Ausgestaltung weist das Kopplungsteil an wenigstens einem Endstück voneinander getrennte Verbindungsöffnungen und/oder wenigstens eine Verbindungsöffnung mit mehreren sich überlappenden Öffnungssegmenten auf, die in gleichen oder unterschiedlichen Abständen zueinander angeordnet sind. Das erste und/oder das zweite Verbindungsteil können daher entlang dem Kopplungsteil verschoben und an beliebigen Stellen fixiert werden. Die Flügelplatten sind vorzugsweise mit mehreren Verbindungsöffnungen versehen, sodass einzelne Verbindungsöffnungen nach geringer Verschiebung jeweils überlappen und von einem Verbindungselement durchstossen werden können. Die Lücke zwischen den beiden Kabelbahnabschnitten, zwischen den vorzugsweise wenigstens ein Pufferelement vorgesehen wird, kann daher weitgehend geschlossen werden.

In einer zweiten vorzugsweisen Ausgestaltung weist das Kopplungsteil ein dem ersten Verbindungsteil zugeordnetes erstes Stabteil und ein dem zweiten Verbindungsteil zugeordnetes zweites Stabteil auf, die durch ein Federelement, federelastisch miteinander verbunden sind. Das Federelement ist vorzugsweise einstückig in das Kopplungsteil integriert. Beispielsweise sind Windungen einer Feder in das Kopplungsteil eingearbeitet. Vorzugsweise umfasst das Kopplungsteil eine federelastische Welle, die durch wellenförmige Einschnitte oder wellenförmige Biegungen in das Kopplungsteil eingearbeitet werden. Das Kopplungsteil kann daher leicht gespannt werden, sodass die beiden Verbindungsteile und Kabelbahnabschnitte stets elastisch gegeneinander gezogen werden. Das federelastische Element kann auch als Gelenk ausgebildet sein, welches erlaubt, die beiden Verbindungsteile und Kabelbahnabschnitte gegeneinander zu neigen.

In einer dritten bevorzugten Ausgestaltung weist das Kopplungsteil ein dem ersten Verbindungsteil zugeordnetes erstes Stabteil und ein dem zweiten Verbindungsteil zugeordnetes zweites Stabteil auf, die durch wenigstens ein Gelenk, z.B. einen Gelenkbolzen, miteinander verbunden sind. Die miteinander gekoppelten Kabelbahnabschnitte können daher wahlweise gegeneinander gedreht werden. Sofern die Kabelbahnabschnitte nach oben gegeneinander gedreht werden, sind gegebenenfalls entsprechende Winkelstücke aus den Seitenwänden auszuschneiden. Die beiden Stabteile können auch durch zwei oder mehrere voneinander beanstandete Gelenke miteinander verbunden werden.

In einer vierten vorzugsweisen Ausgestaltung weist das Kopplungsteil ein dem ersten Verbindungsteil zugeordnetes erstes Stabteil und ein dem zweiten Verbindungsteil zugeordnetes zweites Stabteil auf, die entlang einer Achse ausgerichtet oder gegeneinander geneigt sind. Sofern ein bestimmter Winkel realisiert werden soll, wählt der Installateur ein abgewinkeltes Kopplungsteil mit entsprechender Neigung.

Alle genannten Ausgestaltungen des Kopplungsteils bzw. dessen Merkmale können wahlweise miteinander kombiniert werden. D.h. das Kopplungsteil kann eine vorgegebene Neigung und/oder wenigstens ein Federelement und/oder wenigstens ein Gelenk aufweisen.

In weiteren vorzugsweisen Ausgestaltungen ist vorgesehen, dass das erste Verbindungsteil und das zweite Verbindungsteil je ein Kopplungsteil aufweisen, die nach dem Einhängen der Verbindungsteile gegeneinander gerichtet und miteinander verbindbar sind. In dieser Ausgestaltung können die beiden Verbindungsteile vorteilhaft identisch gefertigt werden. Die Verbindungsstäbe schliessen vorzugsweise einstückig an die Flügelplatte bzw. an eine der Flügelplatten an. Die beiden Verbindungsteile können somit einschliesslich der Verbindungsstäbe einstückig gefertigt werden, weshalb die Verbindungsvorrichtung nur aus diesen beiden Teilen sowie wenigstens einem Verbindungselement besteht.

Die erfindungsgemässe Verbindungsvorrichtung hat den zusätzlichen Vorteil, dass durch die Verbindungsteile gute elektrische Kontaktierungen untereinander und mit den Kabelbahnabschnitten erstellt werden. Durch die praktische widerstandsfreie elektrische Verbindung erfolgt ein Potentialausgleich zwischen den Kabelbahnabschnitten, sodass störende Spannungen und Kriechströme vermieden werden.

Die Fertigung der Verbindungsvorrichtung und deren Einzelteile in den beschriebenen Ausgestaltungen erfolgt vorzugsweise aus Metall, insbesondere Metallblech, oder wahlweise auch aus Kunststoff.

Die beiden vorzugsweise plattenförmigen Verbindungsteile können je aus einer einstückigen Abwicklung, z.B. aus einer Eisenplatte oder Blechplatte, geformt werden. Bevor die ausgeschnittene Abwicklung geformt wird, kann diese noch bearbeitet werden, um Einformungen oder Ausformungen zu bilden oder Material auszuschneiden. In dieser Weise können die Haken aus einem Segment ausgeschnitten und ausgeformt werden. Ebenso können ein Gewinde oder ein Gewindeeinsatz sowie Formelemente, wie Rastelemente oder Verriegelungselemente, in die Abwicklung eingearbeitet werden.

Erfindungsgemässe Verbindungsvorrichtungen werden vorzugsweise durch ein elastisches Pufferelement ergänzt, welches die Bodenplatten der aneinander angrenzenden Kabelbahnabschnitte miteinander verbindet. Dieses Pufferelement schliesst die Lücke zwischen den Kabelbahnabschnitten und ist vorzugsweise deformierbar, sodass ein vorteilhaftes Zusammenspiel mit der Verbindungsvorrichtung resultiert. Das Pufferelement kann kostengünstig mittels eines Extrusionsverfahrens gefertigt und stückweise geliefert oder am Installationsort bedarfsweise von einer Rolle abgerollt und zugeschnitten werden.

Nachfolgend wird die Erfindung anhand von Zeichnungen näher erläutert. Dabei zeigt:
- Fig. 1a: die Innenseite einer erfindungsgemässen Kabelbahn 1 mit einem ersten und einem zweiten Kabelbahnabschnitt 1A, 1B, deren Seitenwände 11A, 11B je durch eine erfindungsgemässe Verbindungsvorrichtung 2 miteinander verbunden sind, die je ein erstes und ein zweites Verbindungsteil 21, 22 sowie ein Kopplungsteil 23 aufweisen;
- Fig. 1b: die Aussenseite der Kabelbahn 1 von Fig. 1a;
- Fig. 2: die Kabelbahn von Fig. 1a und Fig. 1b in vollständiger Darstellung;
- Fig. 3a: die aus der Kabelbahn 1 von Fig. 1a entnommene Verbindungsvorrichtung 2 in einer prinzipiellen Darstellung;
- Fig. 3b: die aus der Kabelbahn 1 von Fig. 1b entnommene Verbindungsvorrichtung 2 in einer prinzipiellen Darstellung;
- Fig. 4a: die Verbindungsvorrichtung 2 von Fig. 2a in einer vorzugsweisen Ausgestaltung mit zwei identischen Verbindungsteilen 21, 22, die je aus einem einzigen Blechstück gefertigt wurden und von denen das erste Verbindungsteil 21 vorzugsweise fest und das zweite Verbindungsteil 22 an einer ausgewählten Position mit dem Kopplungsteil 23 verbindbar ist;
- Fig. 4b: die Verbindungsvorrichtung von Fig. 4a in einer vorzugsweisen Ausgestaltung mit einem ersten Verbindungsteil 21, das einstückig mit dem Kopplungsteil 23 verbunden ist;
- Fig. 4c: eine erfindungsgemässe Verbindungsvorrichtung 2 mit einem ersten und einem zweiten Verbindungsteil 21, 22, die einstückig je mit einem Kopplungsteil 23 verbunden und identisch ausgestaltet sind und mit einem Sperrbolzen 229, mit dem die beiden Verbindungstäbe 23 schraubenlos miteinander verbindbar sind;
- Fig. 5a: ein Kopplungsteil 23 mit einer Verbindungsöffnung 230, die mehrere Öffnungssegmente 2301, ..., 230X aufweist, die in regelmässigen Abständen angeordnet sind;
- Fig. 5b: ein Kopplungsteil 23 mit Formelementen 234 und mit einer Verbindungsöffnung 230, die mehrere Öffnungssegmente 2301, ..., 230X aufweist, die in unregelmässigen Abständen angeordnet sind;
- Fig. 5c: das Kopplungsteil von Fig. 5a, in den ein Federelement 237 eingearbeitet wurde;
- Fig. 5d: ein Kopplungsteil 23 mit zwei durch ein Gelenk 238 miteinander verbunden Stabteilen 23A, 23B, der für Verbindungsteile 21, 22 vorgesehen ist, die an den Seitenwänden 11A, 11B der Kabelbahnabschnitte 1A, 1B montiert werden;
- Fig. 5e: ein Kopplungsteil 23 mit zwei durch ein Gelenk 238 miteinander verbunden Stabteilen 23A, 23B, der für Verbindungsteile 21, 22 vorgesehen ist, die an den Bodenelementen 12A, 12B der Kabelbahnabschnitte 1A, 1B montiert werden;
- Fig. 6a: die Kabelbahn 1 von Fig. 1a mit zwei Kabelbahnabschnitten 1A, 1B, die durch zwei erfindungsgemässe Verbindungsvorrichtungen 2 miteinander verbunden sind, die in die Bodenplatten 12A, 12B der Kabelbahnabschnitte 1A, 1B eingreifen;
- Fig. 6b: die Kabelbahn 1 von Fig. 6a mit den gegeneinander geneigten Kabelbahnabschnitten 1A, 1B, die über ein gelenkiges Kopplungsteil 23 z.B. gemäss Fig. 5e miteinander verbunden sind;
- Fig. 7a: ein z.B. für die Kabelbahn 1 von Fig. 6a vorgesehenes elastisches Pufferelement 15, das ein elastisches Gelenkelement 155 aufweist, an das beidseitig Aufnahmeelemente 15A, 15B anschliessen, die der Aufnahme der Endstücke von Bodenplatten 12A, 12B der angrenzenden Kabelbahnabschnitte 1A, 1B dienen;
- Fig. 7b: das Pufferelement 15 von Fig. 7a mit gegeneinander gedrehten Aufnahmeelementen 15A, 15B; und
- Fig. 8: eine erfindungsgemässe Verbindungsvorrichtung 2 in einer weiteren vorzugsweisen Ausgestaltung.

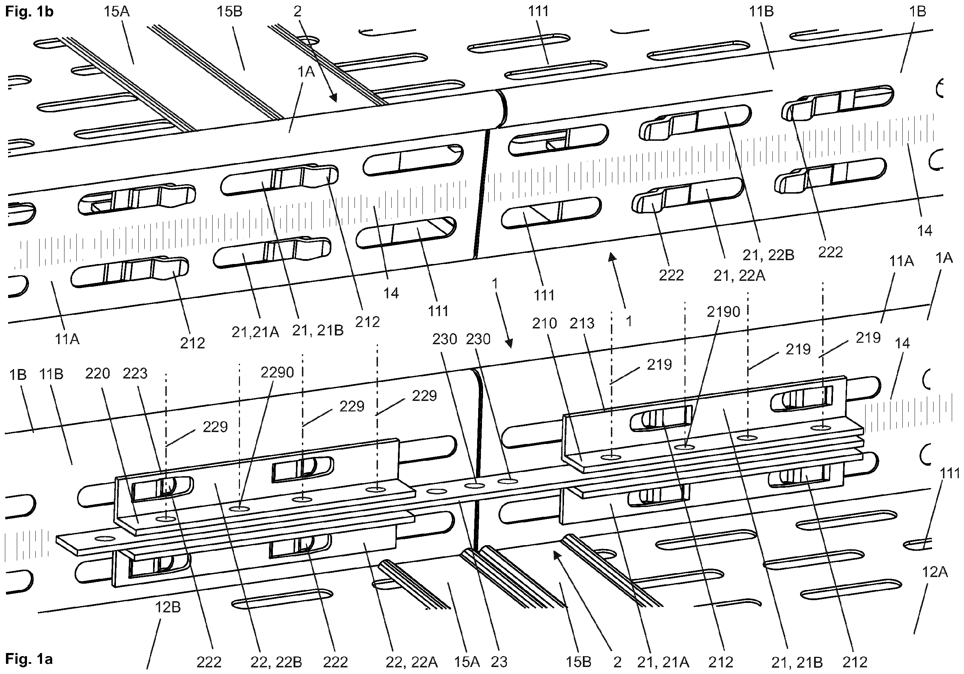

Fig. 1a zeigt die Innenseite einer erfindungsgemässen Kabelbahn 1 in einer bevorzugten Ausgestaltung mit einem ersten und einem zweiten Kabelbahnabschnitt 1A, 1B, die eine Bodenplatte 12A bzw. 12B und beidseits daran anschliessende Seitenwände 11A bzw. 11B aufweisen, die je mit Längslochungen 111 versehen sind. Die beiden Kabelbahnabschnitte 1A, 1B sind beidseits durch erfindungsgemässe Verbindungsvorrichtungen 2 miteinander verbunden und weisen frontseitig an den Bodenplatten 12A, 12B je ein Pufferelement 15A, 15B auf, durch die ein kabelschonender Übergang gewährleistet wird.

Die erfindungsgemässe Verbindungsvorrichtung 2 kann für weitere Kabelbahnen eingesetzt werden, die Seitenelemente oder Bodenelemente mit Öffnungen aufweisen, in die die Verbindungsvorrichtung 2 eingreifen kann.

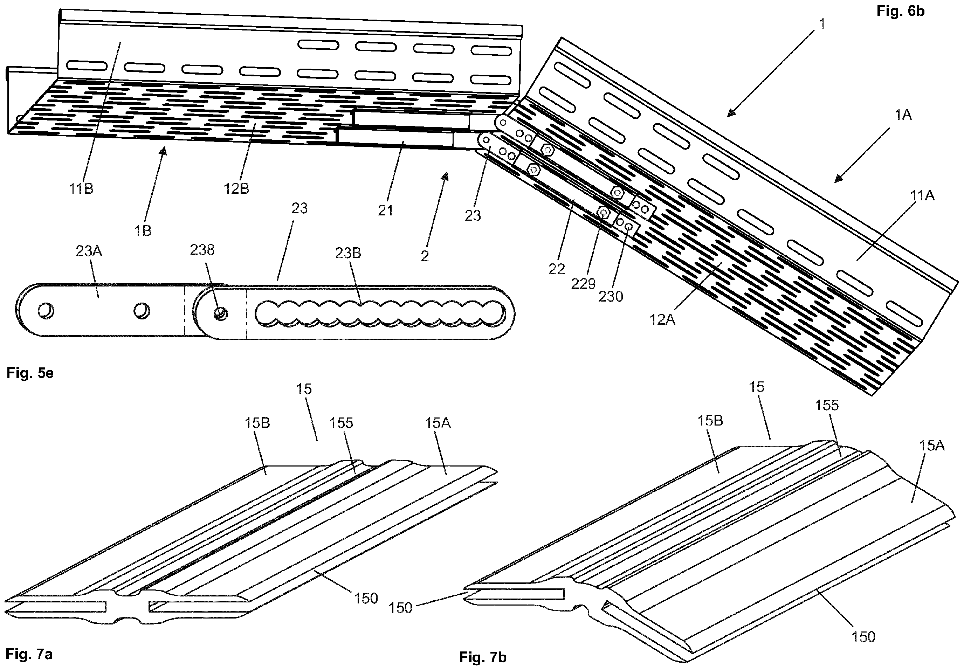

Die Verbindungsvorrichtung 2, die in den Figuren 1a, 1b, 2, 3a und 3b in einer ersten vorzugsweisen Ausgestaltung schematisch gezeigt ist, weist ein in den ersten Kabelbahnabschnitt 1A eingehängtes erstes Verbindungsteil 21 und ein in den zweiten Kabelbahnabschnitt 1B eingehängtes zweites Verbindungsteil 22 auf. Die beiden montierten Verbindungsteile 21, 22 sind durch ein plattenförmiges Kopplungsteil 23 miteinander verbunden. Das Kopplungsteil 23 ist mit dem ersten Verbindungsteil 21, z.B. durch schematisch gezeigte Bolzen 219, vorzugsweise fest und mit dem zweiten Verbindungsteil 22, z.B. durch schematisch gezeigte Bolzen 229, an wählbaren Positionen lösbar verbunden. Z.B. wird das Verbindungsteil 21 mit dem fest montierten Kopplungsteil 23 in die Seitenwand 11A und das zweite Verbindungsteil 22 in die Seitenwand 11B derart eingehängt, dass das zweite Verbindungsteil 22 durch Einsetzen der Bolzen 229 mit dem Kopplungsteil 23 in einer Position verbindbar ist, in der die Kabelbahnabschnitte 1A, 1B stirnseitig aneinander anstossen. In der Folge werden die Kabelbahnabschnitte 1A, 1B in der gewählten Ausrichtung stabil gehalten. Die Verbindungsvorrichtung 2 ist arretiert, bis die Bolzen 229 wieder gelöst werden. Ein verbleibendes Spiel zwischen den Kabelbahnabschnitten 1A, 1B wird vorzugsweise durch die Pufferelemente 15A, 15B aufgefangen. In den Figuren 7a und 7b ist ein Pufferelement 15 gezeigt, das dazu besonders gut geeignet ist.

Die Verbindungsteile 21, 22 sind in einer von mehreren nachstehend beschriebenen Ausgestaltungen gezeigt. Wesentlich ist, dass die Verbindungsteile 21, 22 wenigstens eine Kopplungsplatte 210, 220 mit wenigstens einem daraus ausgeschnittenen Haken 212, 222 und wenigstens einer daran anschliessenden Flügelplatte 213, 223. Durch die Verwendung mehrerer Haken 212, 222, vorzugsweise Hakenreihen kann die Verbindung weiter stabilisiert werden.

In der Ausgestaltung von Fig. 1a umfassen die ersten und zweiten Verbindungsteile 21, 22 je zwei Verbindungssegmente 21A, 21B bzw. 22A, 22B auf, die je eine Kopplungsplatte 210; 220 und daran anschliessend eine senkrecht dazu ausgerichtete Flügelplatte 213; 223 aufweisen. Die Verbindungssegmente 21A, 21B bzw. 22A, 22B weisen ein Rechteckprofil auf und sind mit den parallel zueinander ausgerichteten Flügelplatten 213, 223 einander zugewandt und schliessen das Kopplungsteil 23 ein. Durch Einsetzen von Schrauben oder Bolzen 219 in Montageöffnungen oder Verbindungsöffnungen 2190 der Flügelplatten 213 des ersten Verbindungsteils 21 kann dieses fest mit dem Kopplungsteil 23 verbunden werden. Eine Verbindung kann auch durch Toxen bzw. Durchsetzfügen und weitere Verbindungstechniken realisiert werden.

Das mit Verbindungsöffnungen 230 versehene zweite Endstück des Kopplungsteils 23 liegt zwischen den mit Verbindungsöffnungen 2290 versehenen Flügelplatten 223 des zweiten Verbindungsteils 22. Sobald eine der Verbindungsöffnungen 2290 der Flügelplatten 223 koaxial zu einer Verbindungsöffnung 230 des Kopplungsteils 23 ausgerichtet ist, kann ein Verbindungselement 229, z.B. eine Schraube oder ein Bolzen, hindurch geführt werden, um das Kopplungsteil 23 gegenüber dem zweiten Verbindungsteil 22 zu fixieren.

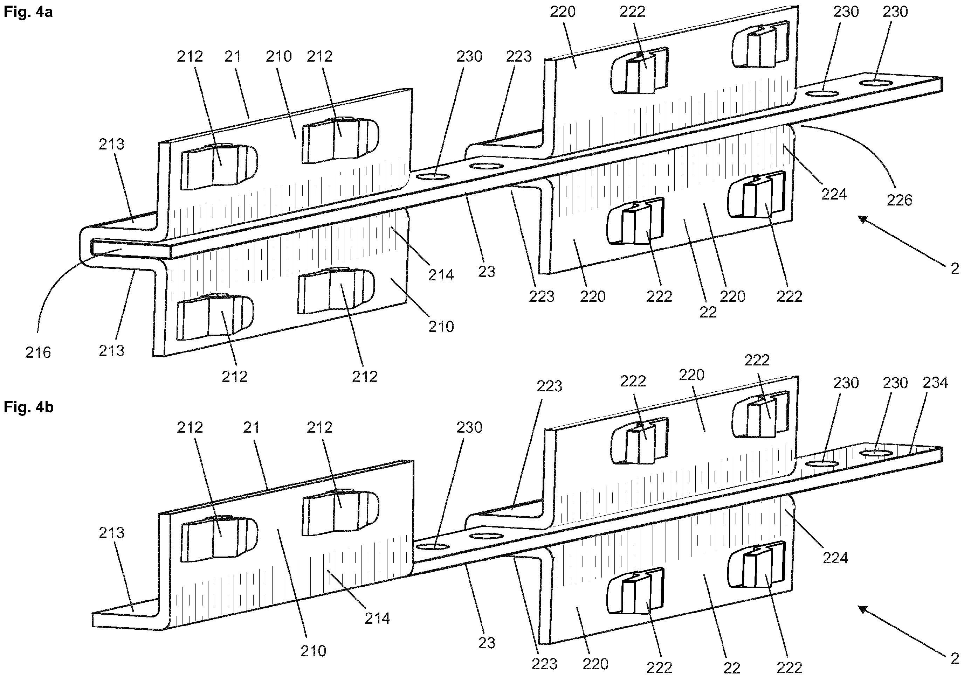

Fig. 1a zeigt ferner, dass die Seitenwände 11A, 11B und gegebenenfalls auch die Bodenplatten 12A, 12B vorzugsweise mit einer Rasterung, Formelementen oder Einformungen 14 versehen sind, die formschlüssig in eine vorzugsweise vorgesehene Rasterung, Formelemente oder Einformungen 214, 224 in den Kopplungsplatten 210, 220 der Verbindungsteile 21, 22 eingreifen können (siehe Fig. 4b).

Fig. 1b zeigt die Aussenseite der Kabelbahn 1 von Fig. 1a mit der an der Innenseite der Seitenwände 11A, 11B montierten Verbindungsvorrichtung 2. Die Haken 212, 222 des ersten und zweiten Verbindungsteils 21, 22 greifen in die Längsöffnungen 111 ein und sind gegeneinander gerichtet. Die Verbindungsvorrichtung 2 kann in gleicher Weise an der Aussenseite der Seitenwände 11A, 11B oder an der Unterseite oder Oberseite der Bodenplatten 12A, 12B montiert werden.

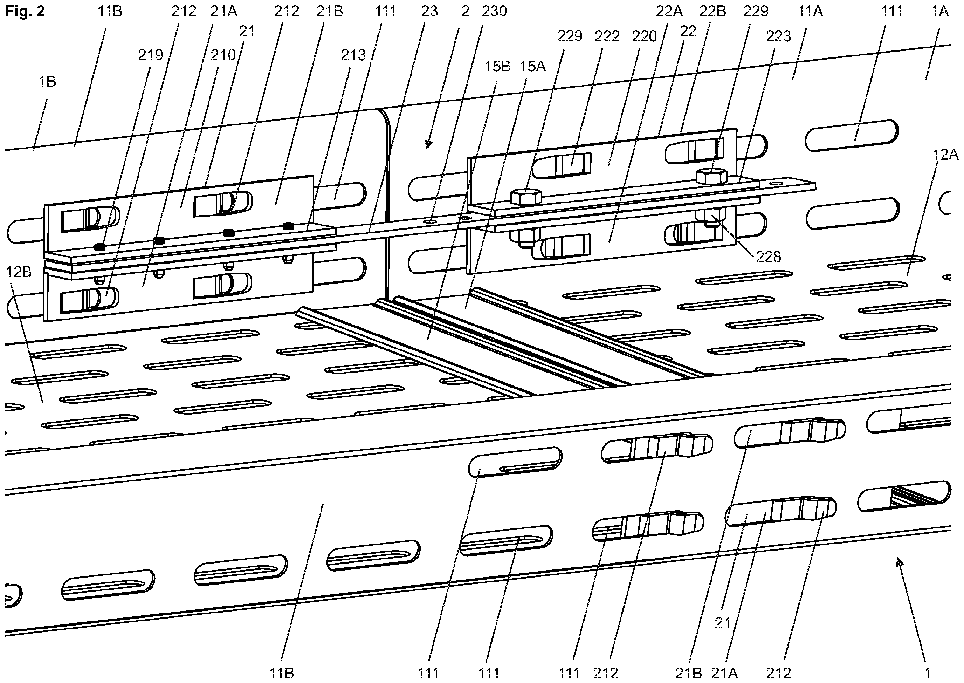

Fig. 2 zeigt die Kabelbahn von Fig. 1a und Fig. 1b in vollständiger Darstellung. Es ist gezeigt, dass die Verbindungssegmente 21A, 21B des ersten Verbindungsteils 21 durch Verbindungselemente 219 fest miteinander und dem dazwischenliegenden Kopplungsteil 23 verbunden sind. Die Verbindungssegmente 22A, 22B des zweiten Verbindungsteils 22 sind hingegen durch Schrauben 219, gegebenenfalls auch Schraubenmuttern, fest miteinander und an einer ausgewählten Position mit dem Kopplungsteil 23 verbunden. Die Öffnungen 2190, 2290 in den Flügelplatten 213, 221 können zu diesem Zweck je mit einem Schraubengewinde versehen sein.

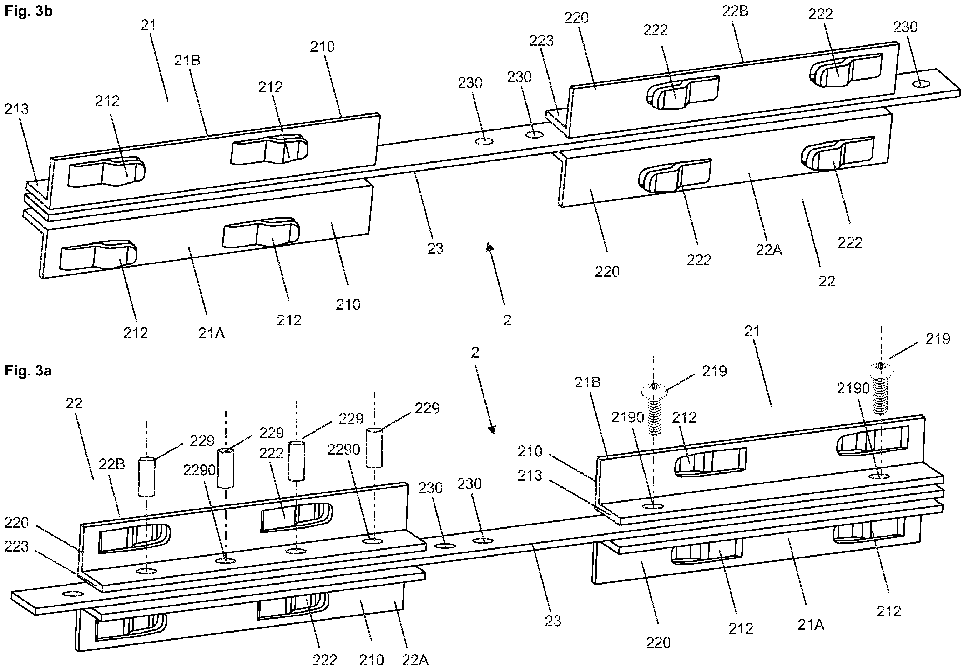

Fig. 3a zeigt die aus der Kabelbahn 1 von Fig. 1a entnommene Verbindungsvorrichtung 2 und Fig. 3b zeigt die aus der Kabelbahn 1 von Fig. 1b entnommene Verbindungsvorrichtung 2 in prinzipieller Darstellung. Fig. 3a zeigt, dass die Verbindungssegmente 21A, 21B des ersten Verbindungsteils 21 miteinander sowie dem dazwischen liegenden Kopplungsteil 23 verschraubt werden. Das zweite Verbindungsteil 22 wird wahlweise durch wenigstens einen Bolzen 229 mit dem Kopplungsteil 23 verbunden. Der Bolzen 229 wird in eine Verbindungsöffnung 2290 eingefügt, die deckungsgleich mit einer Verbindungsöffnung 230 des Kopplungsteils 23 liegt. Nachteilig ist, dass die Verbindungssegmente 21A, 21B; 22A, 22B bei dieser Ausgestaltung als separate Elemente vorliegen.

Fig. 4a zeigt die Verbindungsvorrichtung 2 von Fig. 2a in einer vorzugsweisen Ausgestaltung mit zwei symmetrisch ausgebildeten und identischen Verbindungsteilen 21, 22, die je aus einem einzigen Blechstück gefertigt wurden und von denen das erste Verbindungsteil 21 vorzugsweise fest und das zweite Verbindungsteil 22 an einer ausgewählten Position mit einem Kopplungsteil 23 verbunden ist. Die mit Haken 212, 222 versehenen Kopplungsplatten 210, 220 der beiden Verbindungsteile 21, 22 sind durch schlaufenförmige Flügelplatten 213, 223 miteinander verbunden. Die Verbindungsteile 21, 22 können daher in gleicher Weise aus einem einzigen Blechstück gefertigt werden. Vorzugsweise wird eine Seite des Blechstücks mit einem Raster, Formelemente oder Einformungen 214, 224 versehen, die der Realisierung formschlüssiger Verbindungen dienen.

Fig. 4b zeigt die Verbindungsvorrichtung von Fig. 4a in einer vorzugsweisen Ausgestaltung mit einem asymmetrisch ausgebildeten ersten Verbindungsteil 21, das einstückig mit dem Kopplungsteil 23 verbunden ist und das nur eine Kopplungsplatte 210 aufweist. Auch das zweite Kopplungsteil 22 kann asymmetrisch ausgebildet sein und nur eine Kopplungsplatte 220 aufweisen. Bei symmetrischer Ausgestaltung kann das Kopplungsteil 23 hingegen vorteilhaft von den Verbindungsteilen 21, 22 aufgenommen werden, wie Fig. 4a zeigt. Fig. 4b zeigt ferner, dass auch das Kopplungsteil 23 vorzugsweise beidseitig vorteilhaft mit einer Rasterung, Einformungen oder Formelementen 234 versehen werden kann, sodass eine formschlüssige Verbindung mit den Flügelplatten 213, 223 realisiert werden kann, wenn die Verbindungselemente 219, 229 fest gezogen werden.

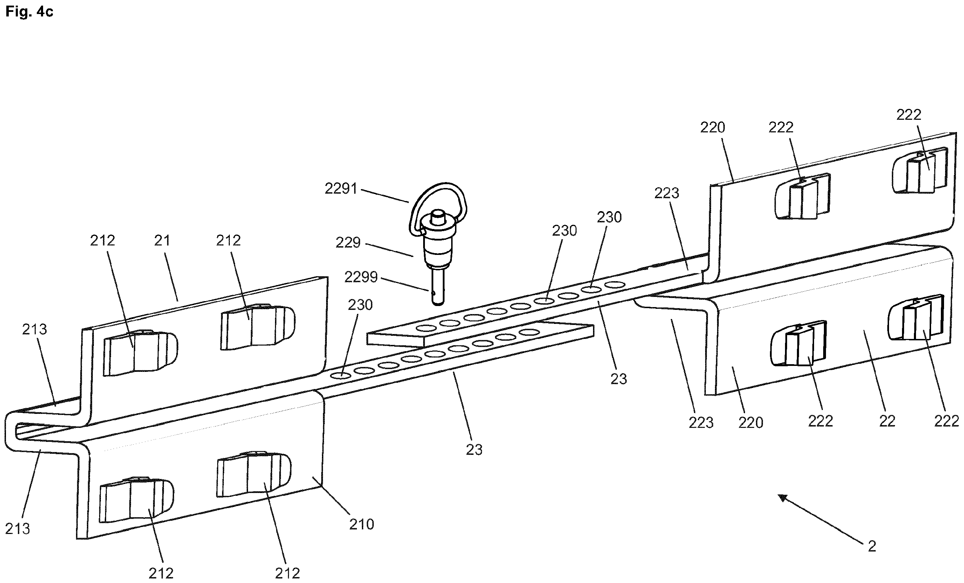

Fig. 4c zeigt eine erfindungsgemässe Verbindungsvorrichtung 2 mit einem ersten und einem zweiten Verbindungsteil 21, 22 in der Ausgestaltung von Fig. 4a, die aber zusätzlich einstückig je mit einem Kopplungsteil 23 verbunden sind. Die Verbindungsteile 21, 22 mit dem je darin integrierten Kopplungsteil 23 sind wiederum identisch ausgebildet und können kostengünstig gefertigt werden. Die Verbindung der Verbindungselemente 21, 22 bzw. der Verbindungsstäbe 23 erfolgt durch Verbindungselemente 229, z.B. Schrauben, Bolzen oder dergleichen. Gezeigt ist ein Kugelsperrbolzen 229, der durch übereinanderliegende Verbindungsöffnungen 230 hindurch geführt wird und automatisch arretiert. Erst durch Ziehen an einem Bügel 2291 wird eine Kugel 2299 entsperrt, sodass der Kugelsperrbolzen 229 von den Verbindungstäben 23 wieder gelöst werden kann.

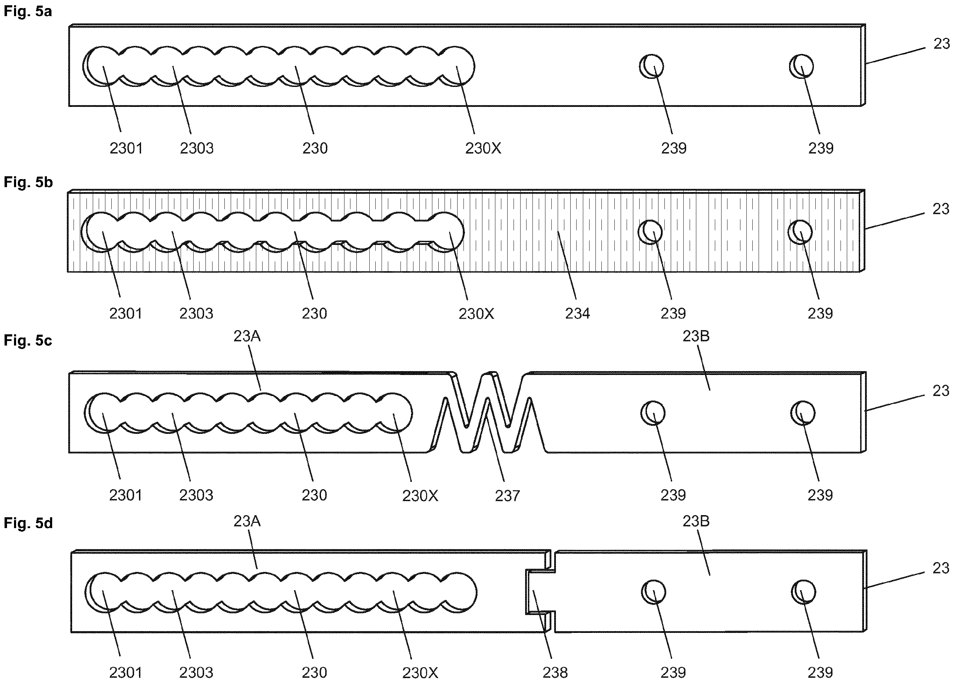

Fig. 5a zeigt ein Kopplungsteil 23 mit einer Verbindungsöffnung 230, die mehrere Öffnungssegmente 2301, ..., 230X aufweist, die in regelmässigen Abständen angeordnet sind. Dieses Kopplungsteil 23 erlaubt es daher, in regelmässigen kurzen Abständen eine formschlüssige Verbindung mit dem zweiten Verbindungsteil 22 herzustellen.

Fig. 5b zeigt ein Kopplungsteil 23 mit Formelementen 234 und mit einer Verbindungsöffnung 230, die mehrere Öffnungssegmente 2301, ..., 230X aufweist, die in unregelmässigen Abständen angeordnet sind. Dieses Kopplungsteil 23 erlaubt es, in kurzen Abständen eine formschlüssige Verbindung mit dem zweiten Verbindungsteil 22 herzustellen. Die Abstände der Öffnungssegmente 2301, ..., 230X vergrössern sich stetig, sodass kein festes Raster resultiert, sondern Verbindungen auch nach Verschiebungen erstellt werden können, die nicht in gleichmässigen Schritten erfolgen.

Fig. 5c zeigt das Kopplungsteil 23 von Fig. 5a, in das ein wellenförmiges Federelement 237 eingearbeitet wurde. Das Kopplungsteil 23 weist daher zwei Stabteile 23A, 23B auf, die die montierten Verbindungsteile 21, 22 federelastisch miteinander verbinden. Erschütterungen der Kabelbahn 1 werden daher federelastisch aufgefangen. Gleichzeitig können Dehnungen, insbesondere Temperaturdehnungen elastisch aufgefangen werden. Weiterhin können Toleranzen und Abweichungen, z.B. beim Einschieben der Verbindungselemente 229, kompensiert werden.

Fig. 5d zeigt das Kopplungsteil 23 von Fig. 5a, der mit einem Gelenk 238 versehen wurde. Das Kopplungsteil 23 weist zwei Stabteile 23A, 23B auf, die gegeneinander gedreht werden können. Dieses Kopplungsteil 23 erlaubt es somit an den Seitenwänden 11A, 11B montierte Verbindungsteile 21, 22 und somit auch die gehaltenen Kabelbahnsegmente 1A, 1B gegeneinander zu drehen. Die Drehachse des Gelenks 238 verläuft senkrecht zur Längsachse und parallel zur Oberseite des Kopplungsteils 23.

Fig. 5e zeigt ein weiteres Kopplungsteil 23 mit zwei Stabteilen 23A, 23B, die durch ein Gelenk 238 miteinander verbunden und in einer Ebene drehbar sind.

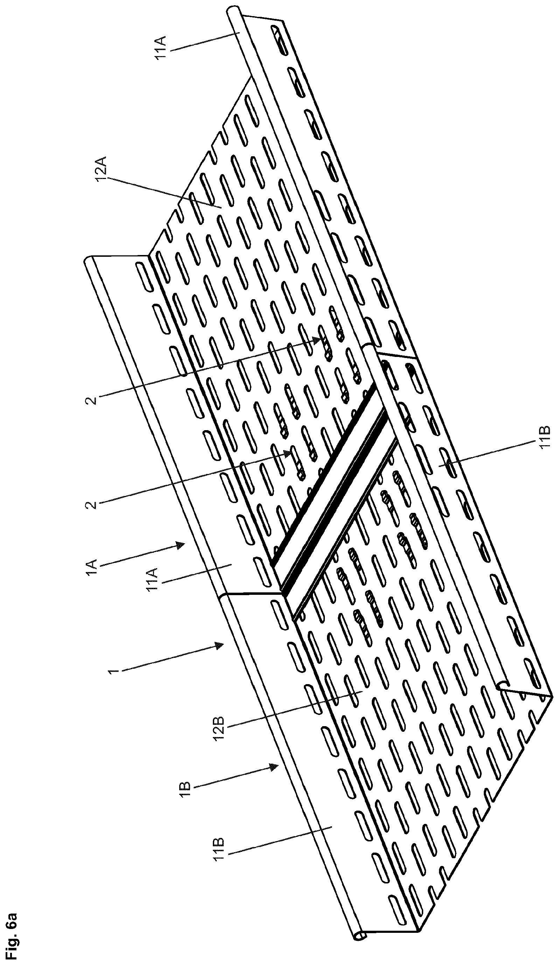

Fig. 6a zeigt die Kabelbahn 1 von Fig. 1a mit zwei Kabelbahnabschnitten 1A, 1B, die durch zwei erfindungsgemässe Verbindungsvorrichtungen 2 miteinander verbunden sind, die in die Bodenplatten 12A, 12B der Kabelbahnabschnitte 1A, 1B eingreifen.

Fig. 6b zeigt die Kabelbahn 1 von Fig. 6a mit den gegeneinander geneigten Kabelbahnabschnitten 1A, 1B, die über ein gelenkiges Kopplungsteil 23 miteinander verbunden sind, wie er in Fig. 5e gezeigt ist.

Verbindungsteile 21, 22, wie sie z.B. in Fig. 4a gezeigt sind, können daher bedarfsweise durch ein Kopplungsteil 23 ergänzt werden, der die gewünschten Funktionselemente aufweist. Auf diese Weise resultieren eine hohe Flexibilität und ein geringer Aufwand zur Herstellung und Lagerung der Verbindungsvorrichtungen. Der Installateur verwendet vorzugsweise identische Verbindungsteile 21, 22 und selektiert jeweils das passende Kopplungsteil 23. Mit minimalem Aufwand kann somit der gesamte Bedarf für ein komplexes Kabelkanalsystem abgedeckt werden. Fig. 6b zeigt, dass die Montage der Verbindungsvorrichtungen 2 an der Unterseite der Kabelbahnsegmente 1A, 1B besonders vorteilhaft ist. Die Gelenkfunktion kann besonders vorteilhaft realisiert werden. Zudem hat der Installateur von unten einen bequemen Zugriff zu den Verbindungsvorrichtungen 2, um diese zu montieren, zu lösen oder zu justieren.

Fig. 7a zeigt ein z.B. für die Kabelbahn 1 von Fig. 6a vorgesehenes elastisches Pufferelement 15, das ein elastisches Gelenkelement 155 aufweist, an das beidseitig Aufnahmeelemente 15A, 15B anschliessen, die der Aufnahme der Endstücke von Bodenplatten 12A, 12B der angrenzenden Kabelbahnabschnitte 1A, 1B dienen. Bei der Verwendung dieses elastischen Pufferelements 15 können die Kabelbahnabschnitte 1A, 1B gegeneinander gedrückt werden, sodass das Einsetzen der Verbindungselemente 229 jeweils leicht möglich ist. Die Kabelbahnsegmente 1A, 1B gewähren nicht nur einen optimalen Kabelschutz, sondern stellen sicher, dass die Haken 212, 222 stets spielfrei in den Öffnungen 111 der Kabelbahnabschnitte 1A, 1B gehalten sind. Auf diese Weise wird auch eine stabile elektrische Kontaktierung sichergestellt.

Fig. 7b zeigt das Pufferelement 15 von Fig. 7a mit gegeneinander gedrehten Aufnahmeelementen 15A, 15B. Das Pufferelement 15 kann daher vorteilhaft in der Kabelbahn von Fig. 6b eingesetzt werden. Nach der Drehung der Kabelbahnsegmente 1A, 1B offen liegende Kanten werden durch das Pufferelement 15 abgedeckt.

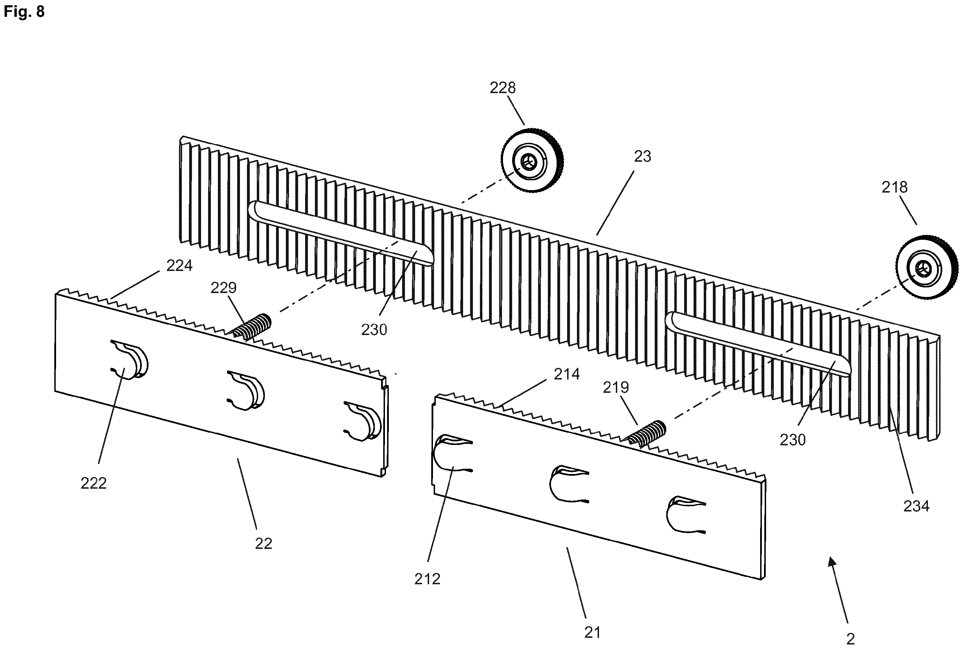

Fig. 8 zeigt eine erfindungsgemässe Verbindungsvorrichtung 2 in einer weiteren vorzugsweisen Ausgestaltung. Die Verbindungsteile 21, 22 und das Kopplungsteil 23 sind an den einander zugewandten Seiten mit zueinander korrespondierenden Einformungen 214, 224, 234 versehen. Das Kopplungsteil 23 weist für jedes der Verbindungsteile 21, 22 eine langgestreckte Verbindungsöffnung 230 auf, durch die hindurch ein Verbindungselemente 219, 229, das mit einem Gewinde versehen ist, hindurch führbar ist. Auf die Verbindungselemente 219, 229 können Schraubenmuttern 228 in der Ausgestaltung von Mehrkantmuttern oder Rändelmuttern, aufgeschraubt werden, um die Verbindungsteile 21, 22 und das Kopplungsteil 23 in formschlüssiger Verbindung zu halten. Die Einformungen 214, 224, 234 sind in Form von Sägezahnelementen realisiert, deren Spitzen oder Kanten senkrecht zur Längsachse der Verbindungsvorrichtung 2 verlaufen. Die Verbindungsteile 21, 22 können daher in kleinen Schritten einander angenähert werden, bis die Kabelbahnabschnitte 1A, 1B stirnseitig aneinander anliegen.

## Patentansprüche

1. Vorrichtung (2) zum mechanischen Verbinden benachbarter erster und zweiter Kabelbahnabschnitte (1A, 1B), die je wenigstens ein erstes bzw. zweites Bodenelement (12A; 12B) und beidseits daran anschliessende Seitenwände (11A; 11B) umfassen, die Öffnungen (111) aufweisen, und die nach deren Verbindung eine Kabelbahn (1) bilden,
mit einem ersten Verbindungsteil (21), das eine erste Kopplungsplatte (210) mit wenigstens einem daraus ausgeschnittenen ersten Haken (212) umfasst, und
mit einem zweiten Verbindungsteil (22), das eine zweite Kopplungsplatte (220) mit wenigstens einem daraus ausgeschnittenen zweiten Haken (222) umfasst, sowie
mit wenigstens einem Kopplungsteil (23), mittels dessen das erste Verbindungsteil (21) und das zweite Verbindungsteil (22), die mit den gegeneinander gerichteten ersten und zweiten Haken (212; 222) in Öffnungen (111) benachbarter Seitenwände (11A, 11B) oder benachbarter Bodenplatten (12A, 12B) einsetzbar sind, miteinander verbindbar sind, **dadurch gekennzeichnet, dass** das Kopplungsteil (23) plattenförmig ausgebildet und mit wenigstens einer Verbindungsöffnung (230) versehen ist, durch die bolzenförmige Verbindungsteile (219, 229) hindurch geführt sind, mittels denen das erste Verbindungsteil (21), sofern es nicht bereits unlösbar mit dem Kopplungsteil (23) verbunden ist, und das zweite Verbindungsteil (22), sofern es nicht bereits unlösbar mit dem Kopplungsteil (23) verbunden ist, formschlüssig und lösbar mit dem Kopplungsteil (23) verbindbar sind.

2. Vorrichtung (2) nach Anspruch 1, **dadurch gekennzeichnet, dass** das erste Verbindungsteil (21) eine erste Flügelplatte (213) aufweist, die vorzugsweise einstückig an die einteilige oder zweiteilige erste Kopplungsplatte (210) anschliesst und dazu vorzugsweise senkrecht geneigt ist und/oder dass das zweite Verbindungsteil (22) eine zweite Flügelplatte (223) aufweist, die vorzugsweise einstückig an die einteilige oder zweiteilige zweite Kopplungsplatte (220) anschliesst und dazu vorzugsweise senkrecht geneigt ist, und dass das Kopplungsteil (23) durch die Verbindungselemente (219, 229) formschlüssig mit der ersten oder der zweiten Flügelplatte (213, 223) verbunden ist.

3. Verbindungsvorrichtung (2) nach Anspruch 1 oder 2, **dadurch gekennzeichnet, dass** die erste und/oder zweite Kopplungsplatte (210; 220) des ersten und zweiten Verbindungsteils (21, 22) Einformungen (214; 224) aufweisen, die zu Einformungen (234) am Kopplungsteil (23) korrespondieren und dass die die erste und/oder zweite Kopplungsplatte (210; 220) durch wenigstens eine Schraubverbindung mit dem Kopplungsteil (23) derart verbunden sind, dass die Einformungen (214; 224) der ersten und/oder zweiten Kopplungsplatte (210; 220) in die Einformungen (234) am Kopplungsteil (23) eingreifen.

4. Verbindungsvorrichtung (2) nach einem der Ansprüche 1, 2 oder 3, **dadurch gekennzeichnet, dass** das Kopplungsteil (23) eine langgestreckte Platte ist, die für jedes der Verbindungsteile (21, 22) eine Längsschlitz aufweist.

5. Verbindungsvorrichtung (2) nach einem der Ansprüche 1-4, **dadurch gekennzeichnet, dass** die erste und/oder zweite Kopplungsplatte (210; 220) des ersten und zweiten Verbindungsteils (21, 22) Einformungen (214; 224) aufweisen, die zu Einformungen (14) an den Bodenelementen (12A; 12B) oder den Seitenwänden (11A; 11B) der Kabelbahnabschnitte (1A, 1B) korrespondieren.

6. Verbindungsvorrichtung (2) nach einem der Ansprüche 1-5, **dadurch gekennzeichnet, dass** die ersten und/oder zweiten Kopplungsplatten (210; 220) des ersten und zweiten Verbindungsteils (21, 22) fest oder lösbar mit den senkrecht dazu ausgerichteten bolzenförmigen Verbindungsteilen (219, 229) verbunden sind.

7. Verbindungsvorrichtung (2) nach einem der Ansprüche 1-6, **dadurch gekennzeichnet, dass** die Einformungen Rillen oder Sägezahnelemente sind, die senkrecht zur Längsachse des Kopplungsteils (23) verlaufen und/oder, dass die ersten und/oder zweiten Kopplungsplatten (210; 220) des ersten und zweiten Verbindungsteils (21, 22) und/oder das plattenförmige Kopplungsteil (23) federelastisch gekrümmt sind, sodass nach der Montage der Verbindungselemente eine spielfreie Verbindung resultiert, die unter mechanischer Spannung steht.

8. Verbindungsvorrichtung (2) nach einem der Ansprüche 1-7, **dadurch gekennzeichnet, dass** das Kopplungsteil (23) an dem dem ersten Verbindungsteil (21) und/oder dem zweiten Verbindungsteil (22) zugewandten Ende mehrere voneinander getrennte Verbindungsöffnungen (230) und/oder eine Verbindungsöffnung (230) mit mehreren sich überlappenden Öffnungssegmenten (2301, ..., 230X) aufweist, die in gleichen oder unterschiedlichen Abständen zueinander angeordnet sind.

9. Verbindungsvorrichtung (2) nach einem der Ansprüche 1-8, **dadurch gekennzeichnet, dass** das Kopplungsteil (23) ein dem ersten Verbindungsteil (21) zugeordnetes erstes Stabteil (23A) und ein dem zweiten Verbindungsteil (22) zugeordnetes zweites Stabteil (23B) aufweist, die durch ein Federelement (237), das mit den beiden Stabteilen (23A, 23B) vorzugsweise eine Einheit bildet, federelastisch miteinander verbunden sind.

10. Verbindungsvorrichtung (2) nach einem der Ansprüche 1-9, **dadurch gekennzeichnet, dass** das Kopplungsteil (23) ein dem ersten Verbindungsteil (21) zugeordnetes erstes Stabteil (23A) und ein dem zweiten Verbindungsteil (22) zugeordnetes zweites Stabteil (23B) aufweist, die durch ein Gelenk (238) drehbar miteinander verbunden sind.

11. Verbindungsvorrichtung (2) nach einem der Ansprüche 1-10, **dadurch gekennzeichnet, dass** das Kopplungsteil (23) ein dem ersten Verbindungsteil (21) zugeordnetes erstes Stabteil (23A) und ein dem zweiten Verbindungsteil (22) zugeordnetes zweites Stabteil (23B) aufweist, die unbelastet entlang einer Achse ausgerichtet oder gegeneinander geneigt sind.

12. Verbindungsvorrichtung (2) nach einem der Ansprüche 1-11, **dadurch gekennzeichnet, dass** an die wenigstens eine erste Flügelplatte (213) des ersten Verbindungsteils (21) ein erstes Kopplungsteil (23) vorzugsweise einstückig anschliesst, der mit einem zweiten Kopplungsteil (23) verbindbar ist, der vorzugsweise einstückig an die zweite Flügelplatte (223) des zweiten Verbindungsteils (22) anschliesst.

13. Kabelbahn (1) mit wenigstens zwei Kabelbahnabschnitten (1A, 1B), die wenigstens ein Bodenelement (12A; 12B) und beidseits daran anschliessende erste und zweite Seitenwände (11A; 11B) umfassen, und die paarweise je durch wenigstens eine Verbindungsvorrichtung (2) nach einem der Ansprüche 1 - 11, die an der Innenseite oder der Aussenseite der Seitenwände (11A, 11B) oder an der Oberseite oder Unterseite der Bodenelemente (12A; 12B) der Kabelbahn (1) montiert ist, koaxial zueinander ausgerichtet oder gegeneinander geneigt miteinander verbundene sind.

14. Kabelbahn (1) nach Anspruch 13, **dadurch gekennzeichnet, dass** die Kabelbahnabschnitte (1A, 1B) durch die wenigstens eine Verbindungsvorrichtung (2) elastisch und/oder gelenkig oder starr miteinander verbunden sind.

15. Kabelbahn (1) nach Anspruch 13 oder 14, **dadurch gekennzeichnet, dass** die Seitenwände (1A, 1B) der Kabelbahnsegmente (1A, 1B) Formelemente (115) aufweisen, mittels denen die Verbindungsvorrichtungen (2) arretierbar sind.
